# EUROPÄISCHE PATENTSCHRIFT

(11) **EP 4 003 732 B1**
(45) Veröffentlichungstag und Bekanntmachung des Hinweises auf die Patenterteilung: **18.09.2024**
(21) Anmeldenummer: 20749825.4
(22) Anmeldetag: 24.07.2020
(51) Int. Cl.: B33Y 40/20, B29C 64/00, D06P 3/24, D06P 5/02, D06P 5/08, D06P 5/20

(54) **VERFAHREN ZUM FÄRBEN VON FORMTEILEN AUS EINEM POLYMER**
METHOD FOR DYEING MOULDED PARTS MADE FROM A POLYMER
PROCÉDÉ POUR TEINTER DES PIÈCES MOULÉES À BASE D'UN POLYMÈRE

(30) Priorität: 24.07.2019 DE 102019120068
(43) Veröffentlichungstag der Anmeldung: 01.06.2022
(73) Patentinhaber: DyeMansion GmbH, 82152 Planegg (DE)
(72) Erfinder: FOLGER, Alena, 82288 Kottgeisering (DE)
(74) Vertreter: 2s-ip Schramm Schneider Bertagnoll Patent- und Rechtsanwälte Part mbB
(86) Internationale Anmeldenummer: PCT/EP2020/071007
(87) Internationale Veröffentlichungsnummer: WO 2021/014004

(56) Entgegenhaltungen:
- EP-A1- 0 555 044
- EP-A1- 1 712 581
- WO-A1-2015/124639
- WO-A1-97/38155
- CN-A- 109 435 245
- DE-A1- 3 621 410
- DE-A1- 3 837 001
- JP-A- S5 549 290
- US-A- 3 995 996
- US-A1- 2015 258 706
- ZHANG YIZHONG ET AL: "Coloring 3D Printed Surfaces by Thermoforming", IEEE TRANSACTIONS ON VISUALIZATION AND COMPUTER GRAPHICS, IEEE SERVICE CENTER, LOS ALAMITOS, CA, US, vol. 23, no. 8, 1 August 2017 (2017-08-01), pages 1924 - 1935, XP011654806, ISSN: 1077-2626, [retrieved on 20170628], DOI: 10.1109/TVCG.2016.2598570

## Beschreibung

### Gebiet der Erfindung

Die Erfindung betrifft ein Verfahren zum Färben von Formteilen aus einem Polymer. Insbesondere betrifft die Erfindung ein Verfahren zum Färben von Formteilen aus einem Polymer, die in einem 3D-Druckverfahren hergestellt werden bzw. hergestellt wurden.

### Hintergrund der Erfindung

Es ist bekannt, Formteile aus einem Polymer bzw. aus einem flexiblen / elastischen Polymer in einem lichthärtenden 3D-Druck-Verfahren herzustellen.

3D-gedruckte Formteile aus einem Polymer (auch aus einem farbigen Polymer) besitzen eine glänzende Oberfläche, was dem Formteil eine minderwertige Optik verleihen kann. Matte Oberflächen hingegen würden einem Formteil eine höherwertige oder hochwertige Optik verleihen.

Ferner sind die Ausgangsmaterialien für den Druck nur in einer begrenzten Anzahl von Farben verfügbar, was die Möglichkeiten des 3D-Druckens von Formteilen in verschiedenen Farben erheblich einschränkt. Es ist bekannt, ein farbiges Ausgangsmaterial (flüssiges Harz oder Polymerpulver) für den 3D-Druck durch Zugabe von Farbstoffen oder Farbpigmenten zu dem Ausgangsmaterial bereitzustellen. Mit dem gefärbten Ausgangsmaterial kann dann im 3D-Druckverfahren ein entsprechend gefärbtes Formteil gedruckt werden.

Die dem Ausgangsmaterial zugegebenen Farbstoffe bzw. Farbpigmente verändern allerdings die Verarbeitbarkeit des Ausgangsmaterials während des Druckvorganges, weshalb der Druckprozess für jede Farbe des Ausgangsmaterials aufwendig angepasst werden muss. Problematisch ist hierbei insbesondere, dass die zugegebenen Farbstoffe und Farbpigmente einen Teil der Lichtenergie absorbieren und dadurch den Druckprozess gravierend stören. Die sich ändernde Verarbeitbarkeit des Ausgangsmaterials muss durch Anpassen des Druckprozesses ausgeglichen werden, um einen sicheren und für alle Farben gleichwertigen Druckprozess zu garantieren. Umfangreiche Prozessoptimierungen sind hierbei notwendig.

Insbesondere bei dunklen Farben, etwa Schwarz, wird sehr viel Lichtenergie von den Farbstoffen bzw. Farbpigmenten absorbiert, was den Druckprozess in vielen Fällen unkontrollierbar oder gar unmöglich macht. Das bedeutet, dass insbesondere bei dunklen bis sehr dunklen Farben des verwendeten Materials ein Drucken nicht möglich ist.

Darüber hinaus ist der Wechsel von einem Ausgangsmaterial in einer Farbe auf ein Ausgangsmaterial in einer anderen Farbe nicht ohne weiteres möglich. Denn hierzu ist eine aufwendige Reinigung des Bauraums nötig, um eine Verschmutzung des Ausgangsmaterials mit dem vorher verwendeten Ausgangsmaterial in einer anderen Farbe ausschließen zu können. Hinzu kommt ferner, dass die Harze im nicht-polymerisierten Zustand meist gesundheitsschädlich bis giftig sind, wodurch eine Reinigung noch aufwendiger ist.

WO 2015/124639 A1 offenbart ein 3D-Druckverfahren.

### Aufgabe der Erfindung

Aufgabe der vorliegenden Erfindung ist es daher, ein Verfahren zum Färben von Formteilen aus einem Polymer, insbesondere von Formteilen aus einem Polymer, die in einem 3D-Druckverfahren hergestellt werden bzw. hergestellt wurden, bereitzustellen, mit dem die vorstehend genannten Nachteile zumindest teilweise vermieden werden und wodurch einerseits die Farben der herzustellenden Formteile nicht auf die verfügbaren Farben des Ausgangsmaterials beschränkt sind und andererseits eine matte und damit hochwertig wirkende Oberfläche der Formteil erzielt wird.

### Erfindungsgemäße Lösung

Gelöst wird diese Aufgabe mit einem Verfahren zum Färben eines in einem 3D-Druckverfahren mit einem Polymer hergestellten Formteils nach dem unabhängigen Anspruch. Vorteilhafte Ausgestaltungen des Verfahrens sind in den abhängigen Ansprüchen angegeben.

Bereitgestellt wird demnach ein Verfahren zum Färben eines in einem 3D-Druck-verfahren mit einem Polymer hergestellten Formteils, wobei das Verfahren
- einen Färbeschritt (FS) zum Färben der Oberfläche des Formteils mit einem Farbstoff, und
- einen ersten Nachbehandlungsschritt (NBS 1) zum Fixieren des in die Oberfläche des Formteils eingedrungenen Farbstoffes, wobei der erste Nachbehandlungsschritt nach dem Färbeschritt durchgeführt wird,
   umfasst, wobei
   in dem Färbeschritt
- das Formteil in eine Färbelösung gelegt wird, wobei die Färbelösung
   - einen Farbstoff, vorzugsweise 0,0001 bis 10 Gew.-%, besonders bevorzugt 0,0001 bis 1 Gew.-% eines Farbstoffes,
   - optional eine Säure oder einen Säure-Puffer, und
   - Wasser, insbesondere auf 100 Gew.-% ergänzte Anteile von Wasser, bevorzugt deionisiertes Wasser,
   umfasst, wobei die Menge der optionalen Säure oder des Säure-Puffers so gewählt wird, dass sich der pH-Wert der Färbelösung bei zwischen 2,5 und 7 einstellt, und wobei der Farbstoff in das Material der Oberfläche des Formteils eingebracht wird bzw. in das Material der Oberfläche des Formteils eindringt, und
- die Färbelösung erwärmt wird, vorzugsweise auf eine Temperatur zwischen 30°C und 150°C, bevorzugt zwischen 60°C und 120°C, und
   in dem ersten Nachbehandlungsschritt
- das in dem Färbeschritt gefärbte Formteil in eine erste Fixierlösung gelegt wird, wodurch der in das Material der Oberfläche des Formteils eingebrachte bzw. der in das Material der Oberfläche des Formteils eingedrungene Farbstoff fixiert wird, wobei die erste Fixierlösung
   - ein Polyphenol, eine Acryl-basierte Syntan-Verbindung, oder ein synthetisches Kondensationsprodukt zwischen aromatischen Verbindungen wie Phenolen oder Naphthalenesulfonsäure mit Formaldehyd oder Urea, vorzugsweise 0,0001 bis 10 Gew.-%, besonders bevorzugt 0,0001 bis 0,5 Gew.-% eines Polyphenols, einer Acryl-basierten Syntan-Verbindung, oder eines synthetischen Kondensationsprodukts zwischen aromatischen Verbindungen wie Phenolen oder Naphthalenesulfonsäure mit Formaldehyd oder Urea, und
   - Wasser, insbesondere auf 100 Gew.-% ergänzte Anteile von Wasser, bevorzugt deionisiertes Wasser
   umfasst, und
- die erste Fixierlösung erwärmt wird, vorzugsweise auf eine Temperatur zwischen 30°C und 150°C, bevorzugt zwischen 60°C und 90°C.

Neben dem Farbstoff, dem Wasser und der optionalen Säure kann die Färbelösung noch weitere Bestandteile umfassen. Zudem kann auch die erste Fixierlösung weitere Bestandteile umfassen.

Bei dem 3D-Druckverfahren handelt es sich um ein lichthärtendes 3D-Druck-Verfahren, etwa ein Photopolymerisations-Verfahren, insbesondere badbasiertes Photopolymerisation-Verfahren (vat photopolymerisation) wie beispielsweise das SLA-Verfahren (Stereolithografie), das DLP-Verfahren (Digital Light Processing), oder das CDLP-Verfahren (Continuous Digital Light Processing, darunter auch das CLIP-Verfahren (Continuous Liquid Interface Production) von Carbon Inc.).

Es können auch andere geeignete 3D-Druckverfahren zum Herstellen von Formteilen aus einem Polymer verwendet werden.

Das erfindungsgemäße Verfahren umfasst demnach einen Färbeschritt, in dem die Oberfläche des Formteils mit einem Farbstoff gefärbt wird, wobei der Farbstoff in das Material der Oberfläche eindringt, und einen ersten Nachbehandlungsschritt, in dem der Farbstoff zusätzlich fixiert wird.

Während des Färbevorganges in dem Färbeschritt wird der Farbstoff in das Material der Oberfläche eingebracht, d.h. der Farbstoff dringt in die Oberfläche des Formteils ein, sodass nach dem Färbeschritt das Material an der Oberfläche bis zu einer bestimmten Eindringtiefe durchgefärbt ist.

Durch die in der Färbelösung vorhandene Säure bzw. Säure-Puffer können basische Gruppen des Polymers ein Proton aufnehmen. Dadurch werden ein Eindringen des wasserlöslichen Farbstoffes sowie die Bindung des Farbstoffs begünstigt.

Ein weiterer Vorteil des erfindungsgemäßen Verfahrens besteht darin, dass die Farbauswahl für die Herstellung eines farbigen Formteils in 3D-Druck nicht auf die Farben des Ausgangsmaterials (flüssiges Harz) beschränkt ist. Es stehen vielmehr alle Farben der Metallkomplexfarbstoffe und der Säurefarbstoffe und Kombinationen hiervon zur Verfügung, um ein 3D-gedrucktes Formteil aus einem Polymer einzufärben. Verschiedene Metallkomplexfarbstoffe bzw. verschiedene Säurefarbstoffe können gemischt werden, um ein breites Spektrum an Farben zu erhalten, mit denen ein 3D-gedrucktes Formteil aus einem Polymer gemäß der Erfindung gefärbt werden kann. Das erfindungsgemäße Färbeverfahren zeichnet sich zudem dadurch aus, dass es auch für kleine Batch-Mengen oder Einzelstücke einer bestimmten Farbe realisiert werden kann, während die direkte Einfärbung des Harzes, d.h. des Ausgangsmaterials für das Drucken, nur für größere Mengen realisiert werden kann.

Durch den Nachbehandlungsschritt wird in vorteilhafter Weise erreicht, dass die Mobilität des Farbstoffes in dem Formteil so weit herabgesetzt wird, dass eine Migration des Farbstoffes auf andere Materialien, die mit dem erfindungsgemäß gefärbten Formteil in Kontakt kommen, verhindert wird. Denn es hat sich gezeigt, dass sich zwischen den Polyphenolen, den Acryl-basierten Syntan-Verbindung, bzw. den synthetischen Kondensationsprodukten zwischen aromatischen Verbindungen wie Phenolen oder Naphthalenesulfonsäure mit Formaldehyd oder Urea der Fixier-lösung und dem in das Material der Oberfläche des Formteils eingedrungenen Farbstoff größere Komplexe bilden, die eine Migration des Farbstoffes durch sterische Hinderung unterbinden.

Das erfindungsgemäße Verfahren eignet sich zum Färben eines in einem 3D-Druckverfahren hergestellten Formteils aus folgenden Polymeren
- bevorzugt Polymere mit einer Shore Härte von 10 Shore A bis 85 Shore D,
- weiter bevorzugt flexible/elastische Polymere mit einem Elastizitätsmodul unter 3000 MPa und einer Shore Härte von 10 Shore A bis 85 Shore D,
- noch weiter bevorzugt flexible/elastische Polymere auf Olefin, Acrylat und/oder Urethanbasis.

Beispiele (Handelsprodukte) der genannten Polymere sind
- EPU-41 von Carbon Inc. (elastomers Polyurethan)
- FPU50 von Carbon Inc. (flexibles Polyurethan)
- AdSint^{®} TPU 80 von BASF 3D Printing Solutions GmbH (thermoplastisches Polyurethan auf Esterbasis),
- Ultrasint TPU01 von BASF 3D Printing Solutions GmbH (thermoplastisches Polyurethan auf Esterbasis),
- Luvosint TPU 92 von Lehmann & Voss & Co. KG (thermoplastisches Polyurethan auf Esterbasis),
- Luvosint TPU 97 von Lehmann & Voss & Co. KG (thermoplastisches Polyurethan auf Esterbasis),
- ESTANE^{®} 3D TPU M95A von Lubrizol (thermoplastisches Polyurethan auf Etherbasis)
- Elastic Resin von Formlabs Inc,
- Ultrasint PP von BASF 3D Printing Solutions GmbH (Polypropylene)

Optional können diese Polymere mit einem Füllmaterial beispielsweise Glaspartikel, Carbonfasern, Pigmenten, Füllern oder Fließmitteln angereichert sein. Dadurch können sich die Materialeigenschaften gegebenenfalls deutlich ändern. Solche gefüllte bzw. angereicherte Kunststoffe geltend als erfindungsgemäße Kunststoffe, mit denen das Formteil im 3D-Druckverfahren hergestellt wird, sofern die Eigenschaften des reinen Kunststoffes (d.h., des nicht mit den Füllmaterialien angereicherten Kunststoffes) das Herstellen eines Formteiles in einem3D-Druckverfahren erlauben, das erfindungsgemäß gefärbt werden kann.

Ein weiterer, aber wesentlicher Vorteil des erfindungsgemäßen Verfahrens liegt darin, dass besonders hochwertig wirkende matte Oberflächen erzeugt werden können.

Vorteilhaft ist es, wenn die Färbelösung zusätzlich ein quartäres Ammoniumsalz im Verhältnis von zwischen 10:1 und 1:10 zum Farbstoff (Masse-Verhältnis quartäres Ammoniumsalz zu Farbstoff) aufweist.

Durch die Verwendung des quartären Ammoniumsalzes in der Färbelösung kann die Färbedauer reduziert werden, ohne Einbußen hinsichtlich der Färbequalität, der Homogenität der Färbung und der Migration des Farbstoffes hinnehmen zu müssen.

Die erste Fixierlösung kann zusätzlich eine Säure oder einen Säure-Puffer aufweisen, wobei die Menge der Säure oder des Säure-Puffers so gewählt wird, dass sich der pH-Wert der erste Fixierlösung bei zwischen 3 und 7 einstellt.

Vorteilhaft ist es, wenn die Färbelösung erwärmt wird, nachdem das Formteil in die Färbelösung gelegt wurde, wobei die Färbelösung mit einer Heizrate von unter 5°C/min erwärmt wird.

Weiter ist es vorteilhaft, wenn die erste Fixierlösung erwärmt wird, nachdem das gefärbte Formteil in die erste Fixierlösung gelegt wurde, wobei die erste Fixierlösung mit einer Heizrate von unter 5°C/min erwärmt wird.

Durch die genannten Heizraten von unterhalb 5 °C/min wird der thermische Stress, dem das Formteil ausgesetzt ist, reduziert und sorgt daher dafür, dass die Materialeigenschaften in dem Färbe- bzw. Nachbehandlungsschritt nicht zu sehr verändert werden, beispielsweise Effekte wie thermischer Verzug werden auf ein Minimum reduziert.

Vorteilhaft ist es, wenn die Färbelösung vor der Entnahme des Formteils aus der Färbelösung auf eine Temperatur zwischen 20°C und 75°C abgekühlt wird, wobei das Abkühlen mit einer Abkühlrate von unter 5°C/min erfolgt.

Weiter ist es vorteilhaft, wenn die erste Fixierlösung vor der Entnahme des Formteils aus der ersten Fixierlösung auf eine Temperatur zwischen 20°C und 75°C abgekühlt wird, wobei das Abkühlen mit einer Abkühlrate von unter 5°C/min erfolgt.

Durch die genannten Abkühlraten von unterhalb 5 °C/min wird der thermische Stress, dem das Formteil ausgesetzt ist, reduziert und sorgt daher dafür, dass die Materialeigenschaften nach dem Färben bzw. nach der Nachbehandlung nicht zu sehr verändert werden, beispielsweise Effekte wie thermischer Verzug werden auf ein Minimum reduziert.

Das Verfahren kann einen optionalen zweiten Nachbehandlungsschritt zum weiteren Fixieren des aufgebrachten Farbstoffes d.h. des in das Material des Formteils eingedrungenen Farbstoffes umfassen, wobei der zweite Nachbehandlungsschritt nach dem ersten Nachbehandlungsschritt ausgeführt wird, wobei in dem zweiten Nachbehandlungsschritt
- das Formteil in eine zweite Fixierlösung gelegt wird, wobei die zweite Fixierlösung
   - ein Salz eines drei- oder vierwertigen Kations, vorzugsweise 0,0001 bis 10 Gew.-%, besonders bevorzugt 0,0001 bis 0,5 Gew.-% eines Salzes eines drei- oder vierwertigen Kations und
   - Wasser, insbesondere auf 100 Gew.-% ergänzte Anteile von Wasser, besonders bevorzugt deionisiertes Wasser
   umfasst, und
- die zweite Fixierlösung erwärmt wird, vorzugsweise auf eine Temperatur zwischen 30°C und 150°C, bevorzugt zwischen 60°C und 90°C.

Die zweite Fixierlösung kann weitere Bestandteile umfassen.

Der zweite Nachbehandlungsschritt kann optional durchgeführt werden. Durch den zweiten Nachbehandlungsschritt kann die Mobilität des Farbstoffes in dem Formteil in vorteilhafter Weise noch weiter herabgesetzt werden.

Vorteilhaft ist es, wenn die zweite Fixierlösung erwärmt wird, nachdem das Formteil in die zweite Fixierlösung gelegt wurde, wobei die zweite Fixierlösung mit einer Heizrate von unter 5°C/min erwärmt wird.

Durch die Heizraten von unterhalb 5 °C/min wird der thermische Stress, dem das Formteil in dem zweiten Nachbehandlungsschritt ausgesetzt ist, reduziert und sorgt daher dafür, dass die Materialeigenschaften in dem Färbe- bzw. Nachbehandlungsschritt nicht zu sehr verändert werden, beispielsweise Effekte wie thermischer Verzug werden auf ein Minimum reduziert.

Vorteilhaft ist es, wenn die zweite Fixierlösung vor der Entnahme des Formteils aus der zweiten Fixierlösung auf eine Temperatur zwischen 20°C und 75°C abgekühlt wird, wobei das Abkühlen mit einer Abkühlrate von unter 5°C/min erfolgt.

Durch die Abkühlrate von unterhalb 5 °C/min vor der Entnahme des Formteils aus der zweiten Fixierlösung wird der thermische Stress, dem das Formteil ausgesetzt ist, reduziert und sorgt daher dafür, dass die Materialeigenschaften nach dem Färben bzw. nach der Nachbehandlung nicht zu sehr verändert werden, beispielsweise Effekte wie thermischer Verzug werden auf ein Minimum reduziert.

Vorteilhaft kann es ferner sein, wenn
- die erste Fixierlösung auf eine Temperatur zwischen 30°C und 45°C erwärmt wird, bevor das Formteil in die erste Fixierlösung gelegt wird, oder
- ein Konzentrat der Fixierlösung auf eine Temperatur zwischen 30°C und 45°C erwärmt wird und das erwärmte Konzentrat mit Wasser gemischt wird, um die Fixierlösung zu erhalten, wobei
   - das Formteil vor dem Mischen des erwärmten Konzentrats mit dem Wasser in das Wasser gelegt wird, wobei das Wasser vorzugsweise ebenfalls auf eine Temperatur zwischen 30°C und 45°C erwärmt wird, bevor das erwärmte Konzentrat mit dem Wasser gemischt wird, oder
   - das Formteil nach dem Mischen des erwärmten Konzentrats mit dem Wasser in die Fixierlösung gelegt wird.

Die Färbelösung kann ferner
- Ammonium- oder Alkalisalze als Stellmittel für Farbstoffe, und/oder
- einen Lösungsvermittler, und/oder
- ein Egalisiermittel,
- einen Entschäumer, und/oder
- ein Lösemittel
aufweisen.

Vorteilhaft ist es, wenn das Formteil
- zwischen dem Färbeschritt und dem ersten Nachbehandlungsschritt, und/oder
- zwischen dem ersten Nachbehandlungsschritt und dem zweiten Nachbehandlungsschritt
gereinigt wird, vorzugsweise mit Wasser, besonders bevorzugt mit deionisiertem Wasser.

Eine chemische Reinigung (z.B. durch reduktive Reinigung) des gefärbten Bauteils vor dem Fixierschritt (d.h. vor dem ersten bzw. zweiten Nachbehandlungsschritt) ist hingegen erfindungsgemäß nicht notwendig. Das Reinigen mit Wasser stellt lediglich sicher, dass keine Rückstände der Färbe- bzw. der ersten Fixierlösung an dem Formteil haften, ehe es in eine neue Lösung gegeben wird.

Vorteilhaft ist es, wenn
- das Formteil für eine Zeit zwischen 5 Minuten und 500 Minuten in die Färbelösung gelegt wird, und/oder
- das Formteil für zwischen 5 Minuten und 500 Minuten, bevorzugt zwischen 10 Minuten und 60 Minuten, in die erste Fixierlösung gelegt wird

Ferner kann es vorteilhaft sein, wenn das Formteil für zwischen 5 Minuten und 500 Minuten, bevorzugt zwischen 10 Minuten und 60 Minuten, in die zweite Fixierlösung gelegt wird.

Darüber hinaus kann es vorteilhaft sein, wenn der Farbstoff ausgewählt wird aus der Gruppe umfassend Metallkomplexfarbstoffe, Säurefarbstoffe, Reaktivfarbstoffe, Azofarbstoffe, Dispersionsfarbstoffe, und Mischungen hiervon.

Das Polymer kann ein Polymer mit einer Shore Härte von 10 Shore A bis 85 Shore D, vorzugsweise ein flexibles/elastisches Polymer mit einer Shore Härte von 10 Shore A bis 85 Shore D, besonders bevorzugt ein flexibles/elastisches Polymer auf Acrylat und/oder Urethanbasis, sein.

### Kurzbeschreibung der Figuren

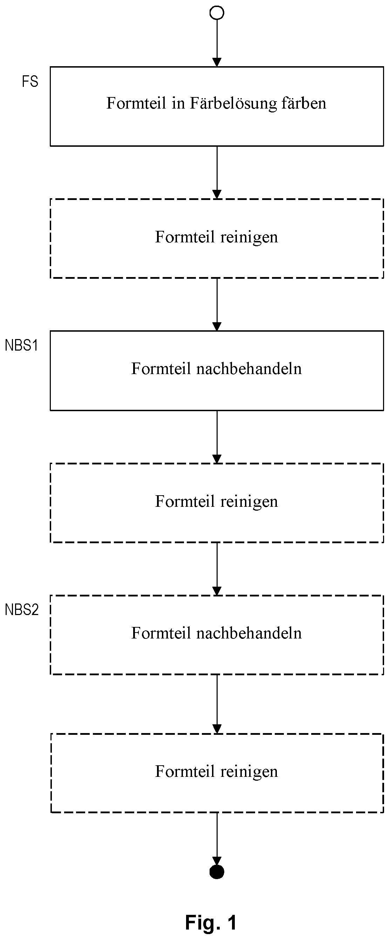

Weitere Einzelheiten und Merkmale der Erfindung ergeben sich aus der nachfolgenden Beschreibung in Verbindung mit der Zeichnung, wobei die einzige Figur 1 ein Ablaufdiagramm zur Verdeutlichung des erfindungsgemäßen Verfahrens zeigt.

### Detaillierte Beschreibung der Erfindung

Fig. 1 zeigt ein Ablaufdiagramm eines erfindungsgemäßen Verfahrens.

Das zu färbende Formteil aus einem Polymer wird vorzugsweise in einem Photopolymerisations-Verfahren, hergestellt.

Zunächst wird das Formteil aus einem Polymer, das in einem 3D-Druckverfahren hergestellt worden ist, in eine Färbelösung gegeben, um das Formteil zu färben (Schritt FS). Nach dem Färben wird das Formteil aus der Färbelösung genommen und gereinigt. "Aus der Färbelösung nehmen" bedeutet, dass das Formteil von der Färbelösung getrennt wird, etwa in dem die Färbelösung aus einem Behälter abgelassen wird oder das Formteil aus dem Behälter mit der Färbelösung herausgenommen wird. Anschließend wird das Formteil in einem ersten Nachbehandlungsschritt NBS1 nachbehandelt, um den Farbstoff an der Oberfläche des Formteils zu fixieren, wodurch eine mögliche Migration des Farbstoffes deutlich reduziert wird. Anschließend wird Formteil noch einmal gereinigt und dann einem zweiten Nachbehandlungsschritt NBS2 zugeführt, in dem der Farbstoff an der Oberfläche des Formteils noch weiter fixiert und damit die eine mögliche Migration des Farbstoffes noch weiter reduziert wird.

Die beiden Reinigungsschritte zwischen dem Färbeschritt FS und dem ersten Nachbehandlungsschritt NBS1 und zwischen dem ersten Nachbehandlungsschritt NBS1 und dem zweiten Nachbehandlungsschritt NBS2 sind optional. Die Reinigung der Formteil erfolgt mit Wasser, vorzugsweise mit deionisiertem Wasser.

Ebenso ist der zweite Nachbehandlungsschritt NBS2 optional.

### Färbeschritt

Zum Färben in dem Färbeschritt werden Metallkomplexfarbstoffe, Säurefarbstoffe, Reaktivfarbstoffe, Azofarbstoffe, Dispersionsfarbstoffe oder Kombinationen hiervon verwendet. Es hat sich gezeigt, dass Säure- und Metallkomplexfarbstoffe aufgrund ihrer Molekülgröße eine geringe Neigung zur Migration haben, was sich positiv auf die Migrationsechtheit der gefärbten Formteile auswirkt. Andererseits wird aber aufgrund der geringen Neigung zur Migration ein Eindringen des Farbstoffes in die Oberfläche des Formteils erschwert oder gar verhindert, insbesondere an solchen Stellen der Oberfläche des Formteils, an denen sich nicht oder nur teilweise reagiertes Polymer bzw. Harz befindet. Das Färben mit in Wasser gelösten Metallkomplex- oder Säurefarbstoffen (ohne weitere Zusatzstoffe und bei kurzen Färbezeiten) führt daher zu einer unregelmäßig gefärbten Oberfläche der Formteile. Ein solches einfaches Färben eignet sich daher zur Qualitätskontrolle von in einem 3D-Druckverfahren hergestellten Formteilen aus einem Polymer, da hierbei Produktionsfehler, insbesondere aber nicht vollständig reagiertes Material an der Oberfläche des Formteils aufgrund der fehlenden oder reduzierten Farbstoffaufnahme offenbart wird.

Eine hochwertige, homogen eingefärbte Oberfläche eines in einem 3D-Druckverfahren hergestellten Formteils aus einem Polymer kann mit diesem Verfahren aber nicht erreicht werden.

Erfindungsgemäß ist es daher vorgesehen, zum Färben in dem Färbeschritt eine Färbelösung zu verwenden, die bezogen auf die Gesamtzusammensetzung der Färbelösung
- 0,0001 bis 10 Gew.-%, vorzugsweise 0,0001 bis 1 Gew.-% eines Farbstoffes,
- optional eine Säure oder einen Säure-Puffer, und
- auf 100 Gew.-% ergänzte Anteile von Wasser, bevorzugt deionisiertes Wasser, aufweist.

Als Farbstoffe können Reaktivfarbstoffe, Azofarbstoffe, Dispersionsfarbstoffe, und Mischungen hiervon verwendet werden. Besonders vorteilhaft ist es, wenn Metallkomplexfarbstoffe, Säurefarbstoffe und Mischungen hiervon verwendet werden.

Als Säure bzw. Säure-Puffer können beispielsweise Essigsäure bzw. ein Essigsäure/Acetat-Puffer verwendet werden. Eine alternative Säure ist beispielsweise Ameisensäure. Alternative Puffer sind beispielsweise Puffer aus Zitronensäure/NaCl/NaOH, Puffer aus Zitronensäure/Natriumcitronat, Puffer aus Kaliumhydrogenphthalat/NaOH, oder ein Puffer aus Ameisensäure/Natriumformiat.

Durch die Verwendung der erfindungsgemäßen Färbelösung wird einerseits eine geringe Migration des Farbstoffes erreicht. Andererseits hat sich überraschender Weise herausgestellt, dass durch die Verwendung der Säure oder des Säure-Puffers in der Färbelösung einerseits eine homogen eingefärbte Oberfläche eines in einem 3D-Druckverfahren hergestellten Formteils aus einem Polymer gewährleistet werden kann und andererseits das Eindringen des an sich migrationsträgen Farbstoffes in die Oberfläche des Formteils unterstützt wird, sodass nach dem Färbeschritt das Material an der Oberfläche des Formteils bis zu einer bestimmten Eindringtiefe durchgefärbt ist.

Versuche haben gezeigt, dass die Menge der Säure oder des Säure-Puffers in der Färbelösung so zu wählen ist, dass sich der pH-Wert der Färbelösung bei zwischen 2,5 und 7, bevorzugt bei zwischen 3,5 und 6, besonders bevorzugt bei zwischen 4 und 5, einstellt.

Das zu färbende Formteil wird in die erfindungsgemäße Färbelösung, die etwa Raumtemperatur (15°C bis 25°C) aufweist, gelegt. Anschließend wird die Färbelösung samt dem sich darin befindlichen Formteil für etwa zwischen 5 Minuten und 500 Minuten, vorzugsweise für etwa zwischen 10 Minuten und 200 Minuten, auf eine Temperatur zwischen 30°C und 150°C, bevorzugt zwischen 60°C und 120°C, erwärmt.

Alternativ kann das Formteil auch in die auf eine Temperatur zwischen 30°C und 150°C, bevorzugt zwischen 60°C und 120°C, erwärmte Färbelösung gelegt werden. Es hat sich aber gezeigt, dass das Formteil aufgrund des Temperaturunterschiedes zwischen dem Formteil und der Färbelösung einem erheblichen thermischen Stress ausgesetzt ist, der die Materialeigenschaften des Formteils verändern kann und beispielsweise zu einem thermischen Verzug bzw. zu einer Geometrieänderung des Formteils (oder Verlust von mechanischen Eigenschaften z.B. Rückstellkraft) führen kann, was unter Umständen nicht gewünscht ist.

Vorteilhaft ist es, wenn die Färbelösung samt dem sich darin befindlichen Formteil mit einer Heizrate von unter 5°C/min auf die Temperatur zwischen 30°C und 150°C, bevorzugt zwischen 60°C und 120°C, erwärmt wird. Dadurch kann der thermische Stress, dem das Formteil während des Erwärmens ausgesetzt ist, auf ein Minimum reduziert.

Durch Zugabe eines quartären Ammoniumsalzes zur Färbelösung im Verhältnis von zwischen 10:1 und 1:10, bevorzugt im Verhältnis von zwischen 5:1 und 1:5, besonders bevorzugt im Verhältnis von zwischen 2:1 und 1:2, zum Farbstoff (Masse-Verhältnis von quartärem Ammoniumsalz zu Farbstoff) kann ein verbesserstes Färbeergebnis erzielt werden.

Durch die Zugabe des quartären Ammonium-Salzes bilden sich temporär Ammonium-Salz-Farbstoffverbindungen in der Färbelösung. Diese Verbindungen weisen eine beschleunigte Diffusion im Formteil auf. Gleichzeitig erhöhen sie als schwach kationische Tenside die Benutzbarkeit der Formteile mit Färbelösung. Es hat sich gezeigt, dass dadurch typische Probleme der Färbung von 3D gedruckten Formteilen im Tauchbadverfahren umgangen oder zumindest erheblich reduziert werden können.

Zum einen steigt die Eindringtiefe des Farbstoffes in das Material des Formteils bzw. die Geschwindigkeit, mit der der Farbstoff in das Material des Formteils eindringt. Dadurch kann bei kürzerer Färbedauer eine höhere Eindringtiefe des Farbstoffes erreicht werden, was wiederum die Farbechtheit des gefärbten Formteils erhöht.

Außerdem ist bei gleichbleibender Färbedauer und Farbstoffkonzentration der erzielte Farbton farbintensiver (dunkler). Um bei gleicher Färbedauer mit einer Färbelösung mit quartärem Ammoniumsalz denselben Farbton zu erzielen wie ohne quartärem Ammoniumsalz kann daher die Konzentration an Farbstoff durch die Zugabe von quartären Ammoniumsalzen reduziert werden. Eine reduzierte Farbstoffkonzentration in der Färbelösung wirkt sich zudem positiv auf die Farbstoffbelastung des bei der Färbung entstehenden Abwassers aus. Durch die Zugabe von quartären Ammoniumsalzen in der Färbelösung kann die Farbstoffkonzentration im Abwasser reduziert werden. Dies ist bei der Verwendung von Metallkomplexfarbstoffen besonders vorteilhaft, da diese besonders abwassergefährdende Metallzentren auf Chrom, Eisen, Cobalt oder Nickelbasis aufweisen.

Des Weiteren hat sich gezeigt, dass sich das Problem der inhomogenen Färbung durch die Zugabe von quartären Ammoniumsalzen der Färbelösung auch bei kurzer Färbedauer umgehen bzw. reduzieren lässt. Besonders Bereiche mit Monomer-Rückständen oder nur teilweise ausreagiertem Material an der Oberfläche lassen sich durch die Zugabe von quartären Ammoniumsalzen auch bei kurzen Färbedauern nahezu identisch zum restlichen Bauteil einfärben.

Als quartäres Ammoniumsalz kann beispielsweise Tetrabutylammoniumbromid verwendet werden. Alternative quartäre Ammoniumsalze sind beispielsweise Tetrapropylammoniumhydroxid, Tetraethylammoniumchlorid, Tetraethylammoniumiodid, Tetrabutylammoniumhydroxid, Tetrabutylammoniumchlorid, oder Tetrabutylammoniumiodid.

Typische Färbedauern bei einer Färbelösung ohne einem quartären Ammoniumsalz liegen bei etwa zwischen 30 Minuten und 500 Minuten. Sofern an der Oberfläche des Formteils keine Monomerrückstände bzw. kein nur teilweise reagiertes Material vorhanden ist, kann die Färbedauer auch bei einer Färbelösung ohne einem quartären Ammoniumsalz zwischen 5 Minuten und 500 Minuten liegen. Es hat sich gezeigt, dass eine Färbedauer von über 500 Minuten zu keiner Verbesserung der Färbequalität führt.

Typische Färbedauern bei einer Färbelösung mit einem quartären Ammoniumsalz liegen bei etwa zwischen 5 Minuten und 200 Minuten, können aber auch bei etwa zwischen 5 Minuten und 500 Minuten.

Versuche haben gezeigt, dass Eindringtiefen des Farbstoffes in die Oberfläche des Formteils von bis zu 100 µm und mehr erreicht werden können. Damit findet ein Eindringen des Farbstoffes in das Formteil statt. Dies hat den Vorteil, dass selbst bei stark mechanisch beanspruchten Abschnitten der Oberfläche des Formteils die ursprüngliche Farbe des Materials (mit dem das Formteil gedruckt wurde) des Formteils nicht (jedenfalls aber erst sehr spät) zum Vorschein kommt. Denn damit die ursprüngliche Farbe zum Vorschein kommt müsste der gefärbte Anteil des Formteils, welches in vielen Fällen sehr flexibel und damit schwer abzutragen ist, komplett abgetragen werden. Im Gegensatz dazu ist das bloße Auftragen von Farbe auf die Oberfläche des Formteils viel anfälliger gegenüber mechanischer Belastung, da hier die Farbe an der Grenzschicht zwischen Farbe und Bauteil abplatzen kann.

Der Färbelösung können bei Bedarf Ammonium- oder Alkalisalze, beispielsweise Trinatriumphosphat oder Natirumsulfat, als Stellmittel für Farbstoffe und/oder Lösungsvermittler und/oder Egalisiermittel und/oder Entschäumer und/oder Lösemittel zugegeben werden.

Als Lösungsvermittler können beispielsweise ein- und mehrwertige Alkohole, , Ether, Amide, Acetate und Nitrile z.B. Benzylalkohol, Ethylenglykol, Propylenglykol, Di- und Triethylenglykol, Ethylenglykolmonomethylether, Diethylenglykolmonoethyletheracetat, Dipropylenglykol, Glycerin, Glycerin-1,3-diethylether, Formamid, N,N-Dimethylacetamid, N,N-Dimethylmethoxyacetamid, oder N,N,N',N'-Tetramethylharnstoff und Mischungen hiervon verwendet werden.

Als Egalisiermittel haben sich Ethoxylate und Ester von z.B. Fettsäuren, Alkoholen oder Alkylaminen als geeignet herausgestellt.

Als Entschäumer eignen sich beispielsweise Ethoxylate z.B. von Alkoholen oder Estern z.B. Phosphorsäure-Isonylester, Polysiloxanen, Mineralölen und Gemischen hiervon.

Bevor das Formteil aus der Färbelösung entnommen wird, ist es vorteilhaft die Färbelösung auf eine Temperatur zwischen 20°C und 75°C abzukühlen. Um auch hierbei eine ungewollte Änderung der Materialeigenschaften des Formteils zu vermeiden, ist es vorteilhaft das Abkühlen mit einer Abkühlrate von unter 5°C/min durzuführen. Bei der Entnahme des Formteils kann es sich sowohl um eine aktive Entnahme des Formteils aus der Färbelösung, als auch um ein Ablassen der Färbelösung aus dem Färbebehälter, bei welchem das Formteil im leeren Färbebehälter zurück bleibt, handeln.

Am Ende der Färbung kann optional ein Reinigungsschritt durchgeführt werden. Dabei wird das gefärbte, aus der Farbstofflösung entnommene Formteil mit Wasser, oder besonders bevorzugt mit deionisiertem Wasser gespült. Besonders vorteilhaft an dem erfindungsmäßigen Verfahren ist es, dass dieser Reinigungsschritt zum einen nicht zwingend notwendig ist und zum anderen auf die Verwendung von reaktiven Chemikalien vollständig verzichtet. Erfindungsgemäß ist keine reduktive Reinigung der Formteile im alkalischen Milieu, welche bei anderen Färbe- und Fixierverfahren üblich sind, nötig.

Dies hat den Vorteil, dass die Formteile während der Färbung nur einem Milieu (sauer bis neutral) ausgesetzt sind, was den chemischen Stress auf die Oberfläche der Formteile deutlich reduziert. Denn ähnlich wie bei schnellen Temperaturwechseln kann sich auch ein Wechsel des pH-Wertes von sauer zu basisch negativ auf das Formteil auswirken.

Außerdem kann es bei einer reduktiven Reinigung zu einer Teilentfärbung des Formteils und damit zu einer ungewollten Änderung des Farbtones kommen. Besonders bei Farbstoffen, bei welchen der Farbton durch eine Azogruppe bestimmt ist, kann eine reduktive Reinigung zu einem Entfärben führen, da durch das Reduktionsmittel die Azobrücke gespalten wird.

Hinzu kommt, dass eine reduktive Reinigung sehr viel Zeit in Anspruch nimmt. Versuche haben gezeigt, dass eine reduktive Reinigung bis zu einer Stunde oder mehr dauern kann, während das Reinigen, d.h. Abspülen mit Wasser innerhalb weniger Minuten durchgeführt werden kann.

### Erster Nachbehandlungsschritt

In dem ersten Nachbehandlungsschritt wird der Farbstoff an der Oberfläche des Formteils bzw. in dem Material an der Oberfläche des Formteils fixiert. D.h., die Mobilität des Farbstoffes in dem Material des Formteils wird so weit herabgesetzt, dass eine Migration des Farbstoffes auf andere Materialien, die mit dem erfindungsgemäß gefärbten Formteil in Kontakt kommen, verhindert wird.

Das in dem Färbeschritt gefärbte und gegebenenfalls nach dem Färben gereinigte Formteil wird hierzu für zwischen 1 Minute und 500 Minuten, bevorzugt zwischen 5 Minuten und 500 Minuten, besonders bevorzugt zwischen 10 Minuten und 60 Minuten, in eine erste Fixierlösung gegeben, die
- 0,0001 bis 10 Gew.-%, vorzugsweise 0,0001 bis 0,5 Gew.-% eines Polyphenols, einer Acryl-basierten Syntan-Verbindung, oder eines synthetischen Kondensationsproduktes zwischen aromatischen Verbindungen, insbesondere Phenole oder Naphthalenesulfonsäure, mit Formaldehyd oder Urea, und
- auf 100 Gew.-% ergänzte Anteile von Wasser, bevorzugt deionisiertes Wasser aufweist

Dabei bilden sich Komplexe zwischen dem Farbstoff und dem Polyphenol bzw. der Acryl-basierten Syntan-Verbindung oder dem Kondensationsprodukt, die aufgrund ihrer Größe die Mobilität des Farbstoffes reduzieren, sodass eine Migration des Farbstoffes verhindert wird. Dadurch kann ein in einem 3D-Druckverfahren hergestelltes Formteil aus einem Polymer gefärbt werden, das hinsichtlich des Farbstoffes migrationsecht ist.

Als geeignete Fixiermittel haben sich Tanninsäure, Corilagin, Glucogallin,Pedunculagin, weitere Polyphenol-Derivate, aromatische Sulfonsäure-Kondensationsprodukte, Acrylsäure-Derivat-Copolymere, aromatische Makromolekül-Derivate, Aliphatische Aminderivate, Oxysulfonat-Kondensationsprodukte, Polyethylenamin-Derivate, Aryl-Sulfonat-Formaldehyd-Kondensationsprodukte und makromolekulare aromatische Sulfonsäuren erwiesen.

Die erste Fixierlösung wird auf eine Temperatur zwischen 30°C und 150°C, bevorzugt zwischen 60°C und 90°C, erwärmt, um eine optimale Wirkung hinsichtlich der Farbstofffixierung zu erreichen.

Es kann vorteilhaft sein, wenn die erste Fixierlösung zusätzlich eine Säure oder einen Säure-Puffer aufweist, wobei die Menge der Säure oder des Säure-Puffers so gewählt wird, dass sich der pH-Wert der erste Fixierlösung bei zwischen 3 und 7, vorzugsweise bei zwischen 4 und 5,5, einstellt. Dadurch werden einerseits eine gute Stabilität der Phenole, der Acryl-basierten Syntan-Verbindung bzw. des Kondensationsprodukts und andererseits eine gute Löslichkeit derselben gewährleistet.

Um das Formteil auch während des ersten Nachbehandlungsschritts nicht einem thermischen Stress auszusetzen, ist es vorteilhaft, die erste Fixierlösung zusammen mit dem gefärbten Formteil mit einer Heizrate von unter 5°C/min auf die Temperatur von zwischen 30°C und 150°C, bevorzugt zwischen 60°C und 90°C, zu erwärmen.

Bevor das Formteil aus der ersten Fixierlösung entnommen wird, ist es vorteilhaft die erste Fixierlösung auf eine Temperatur zwischen 20°C und 75°C abzukühlen. Um auch hierbei eine ungewollte Änderung der Materialeigenschaften des Formteils zu vermeiden, ist es vorteilhaft das Abkühlen mit einer Abkühlrate von unter 5°C/min durzuführen.

Mit dem Färbeschritt und dem nachfolgenden ersten Nachbehandlungsschritt wird ein gefärbtes Formteil aus einem Polymer bereitgestellt, das einerseits eine äußerst homogen gefärbte Oberfläche aufweist und das sich andererseits durch eine hohe Migrationsechtheit hinsichtlich des Farbstoffes auszeichnet. Aufgrund der erzielten Eindringtiefen des Farbstoffes in die Oberfläche des Formteils wird ein Abplatzen der Farbe verhindert und so bleibt die Farbe des Formteils auch unter mechanischer Beanspruchung erhalten.

Überraschender Weise hat sich gezeigt, dass mit dem erfindungsgemäßen Verfahren nicht nur eine besonders gute Fixierung der Farbstoffe erreicht werden kann, sondern darüber hinaus auch matte Oberflächen erzielt werden können, die dem Formteil eine besonders hochwertig wirkende Optik verleihen. Das erfindungsgemäße Verfahren eignet sich daher auch zum Herstellen von gefärbten und matten Oberflächen von Formteilen, die in einem 3D-Druckverfahren, insbesondere in einem Photopolymerisations-Verfahren, insbesondere badbasiertes Photopolymerisation-Verfahren, hergestellt werden.

### Zweiter Nachbehandlungsschritt

Nach dem ersten Nachbehandlungsschritt und gegebenenfalls nach einer Reinigung des Formteils kann optional ein zweiter Nachbehandlungsschritt durchgeführt werden, um die Fixierung des Farbstoffes an der Oberfläche bzw. im Material der Oberfläche noch weiter zu verbessern und den Mattierungseffekt zu verstärken.

In dem zweiten Nachbehandlungsschritt wird das Formteil für zwischen 5 Minuten und 500 Minuten, bevorzugt zwischen 10 Minuten und 60 Minuten, in eine zweite Fixierlösung gelegt. Die zweite Fixierlösung mit dem sich darin befindlichen Formteil wird auf eine Temperatur zwischen 30°C und 150°C, bevorzugt zwischen 60°C und 90°C, erwärmt.

Die zweite Fixierlösung weist
- 0,0001 bis 10 Gew.-%, vorzugsweise 0,0001 bis 0,5 Gew.-% eines Salzes eines drei- oder vierwertigen Kations und
- auf 100 Gew.-% ergänzte Anteile von Wasser, besonders bevorzugt deionisiertes Wasser
aufweist.

Durch das Salz eines drei- oder vierwertigen Kations wird die Mobilität des Farbstoffes noch weiter reduziert, da ein noch stabilerer und deutlich schlechter lösbarer Komplex entsteht. Dementsprechend kann die Migrationsechtheit hinsichtlich des Farbstoffes noch weiter erhöht werden.

Geeignete Salze eines drei- oder vierwertigen Kations (Antimon, Eisen, Chrom, Kupfer, Titan, Zirkon oder Bismuth) sind beispielsweise Antimonacetat, Kaliumantimonyltartrar oder Titanylsulfat.

Um das Formteil auch während des zweiten Nachbehandlungsschritts nicht einem thermischen Stress auszusetzen, ist es vorteilhaft, die zweite Fixierlösung zusammen mit dem Formteil mit einer Heizrate von unter 5°C/min auf die Temperatur von zwischen 30°C und 150°C, bevorzugt zwischen 60°C und 90°C, zu erwärmen.

Bevor das Formteil aus der zweiten Fixierlösung entnommen wird, ist es vorteilhaft die zweite Fixierlösung auf eine Temperatur zwischen 20°C und 75°C abzukühlen. Um auch hierbei eine ungewollte Änderung der Materialeigenschaften des Formteils zu vermeiden, ist es vorteilhaft das Abkühlen mit einer Abkühlrate von unter 5°C/min durzuführen.

In einer Ausgestaltung der Erfindung können der Färbeschritt FS und/oder der erste Nachbehandlungsschritt NBS1 und/oder der zweite Nachbehandlungsschritt NBS2 bei Überdruck bzw. oberhalb des Atmosphärendrucks in einem druckdichten Behälter durchgeführt werden.

Dadurch kann verhindert werden, dass die Färbelösung oder Bestandteile der Färbelösung und/oder die erste Fixierlösung oder Bestandteile der ersten Fixierlösung und/oder die zweite Fixierlösung oder Bestandteile der zweiten Fixierlösung verdampfen, sodass gewährleistet ist, dass das Formteil während des Färbeschrittes bzw. während der Nachbehandlungsschritte vollständig in der wässrigen Färbelösung bzw. in den wässrigen Fixierlösungen liegt.

### Beispiel 1:

### Färbeschritt

Es wird eine wässrige Färbelösung (vorzugsweise auf Basis von deionisiertem Wasser) hergestellt, mit folgender Zusammensetzung:
- 0,075 Gew.-% des Farbstoffes C.I.Acid Red 131,
- 0,05 Gew.-% Tetrabutylammoniumbromid (quartäres Ammoniumsalz), und
- 0,1 Gew.-% Essigsäure (der pH Wert der Färbelösung stellt sich bei etwa 4,25 ein).

Das Formteil, das aus einem elastischen Polyurethan im 3D-Druckverfahren gedruckt wurde, wird in die Färbelösung gelegt. Die Färbelösung und das sich darin befindliche Formteil werden dann zusammen mit einer Heizrate von 2°C/min auf 75°C erhitzt. Die Temperatur von 75°C wird für 20 Minuten gehalten.

Durch die Zugabe des quartären Ammoniumsalzes wird bereits nach 5 Minuten eine homogene Färbung erreicht wird. Um auch höhere Eindringtiefen des Farbstoffes in das Material der Oberfläche des Formteils zu erreichen, wird die Färbung für 20 Minuten durchgeführt.

Anschließend wird die Färbelösung mit dem darin befindlichen Formteil mit einer Abkühlrate von 2°C/min abgekühlt. Bei Erreichen von etwa 50°C wird das Formteil aus der Färbelösung genommen.

Anschließend wird das Formteil aus der Färbelösung genommen und mit Wasser (bevorzugt deionisiertes Wasser) gereinigt.

### Erster Nachbehandlungsschritt

Es wird eine wässrige erste Fixierlösung (vorzugsweise auf Basis von deionisiertem Wasser) hergestellt, mit folgender Zusammensetzung:
- 0,125 Gew.-% Tanninsäure (als Polyphenol), und
- 0,1 Gew.-% Ameisensäure (der pH Wert der Fixierlösung stellt sich bei etwa 5 ein).

Die erste Fixierlösung wird auf etwa 40°C erwärmt, um ein schnelles Lösen der Tanninsäure zu erreichen. Anschließend wird das gefärbte Formteil in die erste Fixierlösung gegeben und die erste Fixierlösung wird mit einer Heizrate von 3°C/min weiter erwärmt auf eine Temperatur von 80°C. Diese Temperatur wird für 15 Minuten gehalten.

Anschließend wir die erste Fixierlösung mit dem darin befindlichen Formteil mit einer Abkühlrate von 1°C/min auf etwa 40°C abgekühlt.

Anschließend wird das Formteil aus der ersten Fixierlösung genommen und mit Wasser (bevorzugt deionisiertes Wasser) gereinigt.

In einer alternativen Variante wird ein Konzentrat der ersten Fixierlösung hergestellt, mit folgender Zusammensetzung:
- 1,25 g Tanninsäure (als Polyphenol),
- 1 ml Ameisensäure, und
- ca. 50 ml Wasser (bevorzugt deionisiertes Wasser).

Dieses Konzentrat wird dann auf etwa 40°C erwärmt.

Das Formteil wird in etwa 950 ml Wasser (bevorzugt deionisiertes Wasser) gelegt, wobei das Wasser zusammen mit dem Formteil vorzugsweise auf etwa 40°C erwärmt wird.

Anschließend wird das erwärmte Konzentrat dem Wasser mit dem Formteil hinzugegeben, sodass sich eine erste Fixierlösung mit 0,125 Gew.-% Tanninsäure und 0,1 Gew.-% Ameisensäure ergibt. Der pH Wert der Fixierlösung stellt sich bei etwa 5 ein.

Die erste Fixierlösung mit dem darin angeordneten Formteil wird dann mit einer Heizrate von 3°C/min weiter erwärmt auf eine Temperatur von 80°C. Diese Temperatur wird für 15 Minuten gehalten.

Anschließend wird die erste Fixierlösung mit dem darin befindlichen Formteil mit einer Abkühlrate von 1°C/min auf etwa 40°C abgekühlt.

Anschließend wird das Formteil aus der ersten Fixierlösung genommen und mit Wasser (bevorzugt deionisiertes Wasser) gereinigt.

### Beispiel 2:

### Färbeschritt

Es wird eine wässrige Färbelösung (vorzugsweise auf Basis von deionisiertem Wasser) hergestellt, mit folgender Zusammensetzung:
- 0,1 Gew.-% des Farbstoffes C.I. Acid Black 172, und
- 0,1 Gew.-% Essigsäure/Acetat Puffer (es stellt sich ein pH-Wert von 4,5 ein).

Das Formteil, das aus einem flexiblen Polymer auf Methacrylatbasis im 3D-Druck-verfahren gedruckt wurde, wird in die Färbelösung gelegt. Die Färbelösung und das darin angeordnete Formteil werden dann mit einer Heizrate von 2°C/min auf 75 °C erwärmt. Die Temperatur von 75°C wird für 200 Minuten gehalten. Es kann ein quartäres Ammoniumsalz der Färbelösung hinzugegeben werden, wodurch die Färbedauer reduziert werden kann.

Anschließend werden die Färbelösung und das darin angeordnete Formteil mit einer Abkühlrate von 2°C/min auf etwa 50°C abgekühlt.

Anschließend wird das Formteil aus der Färbelösung genommen und mit Wasser (bevorzugt deionisiertes Wasser) gereinigt.

### Erster Nachbehandlungsschritt

Es wird eine wässrige erste Fixierlösung (vorzugsweise auf Basis von deionisiertem Wasser) mit 0,2 Gew.-% EPIZOTAN FR-8800 (Handelsname des Herstellers FA-KS Chemicals) hergestellt.

Die erste Fixierlösung wird dann auf eine Temperatur von 35°C erwärmt.

Das gefärbte Formteil wird in die erste Fixierlösung gegeben und die erste Fixier-lösung wird mit dem sich darin befindlichen Formteil mit einer Heizrate von 3°C/min auf eine Temperatur von 70°C erwärmt. Die Temperatur von 70°C wird für 30 Minuten gehalten.

Anschließend wird die erste Fixierlösung mit dem sich darin befindlichen Formteil mit einer Abkühlrate von 1°C/min auf etwa 40°C abgekühlt.

Anschließend wird das Formteil aus der ersten Fixierlösung genommen und mit Wasser (bevorzugt deionisiertes Wasser) gereinigt.

Der erste Nachbehandlungsschritt aus Beispiel 1 kann auch als erster Nachbehandlungsschritt in Beispiel 2 verwendet werden. Ebenso kann der erste Nachbehandlungsschritt aus Beispiel 2 auch als erster Nachbehandlungsschritt in Beispiel 1 verwendet werden.

Bei den vorstehenden Beispielen 1 und 2 kann nach dem ersten Nachbehandlungsschritt ein zweiter Nachbehandlungsschritt durchgeführt werden.

Hierzu wird eine wässrige zweite Fixierlösung (vorzugsweise auf Basis von deionisiertem Wasser) mit 0,125 Gew.-% Kaliumantimonyltartrat hergestellt.

Die zweite Fixierlösung wird dann auf etwa 40°C erwärmt. Anschließend wird das Formteil in die zweite Fixierlösung gegeben und die zweite Fixierlösung mit dem darin angeordneten Formteil wird mit einer Heizrate von 3°C/min auf eine Temperatur von 80°C erwärmt. Die Temperatur von 80°C wird für 20 Minuten gehalten.

Anschließend wird die zweite Fixierlösung mit dem sich darin befindlichen Formteil mit einer Abkühlrate von 1°C/min auf etwa 40°C abgekühlt.

Anschließend wird das Formteil aus der zweiten Fixierlösung genommen und gereinigt, beispielsweise mit Wasser.

Tabellarische Übersicht zu den Beispielen 1 und 2

| | Beispiel 1 | Beispiel 2 |
|---|---|---|
| Material des gedruckten Formteils | elastisches Polymer auf Urethanbasis | flexiblen Polymer auf Methacrylatbasis |
| Färbelösung (wässrig) | 0,075 Gew.-% Farbstoff C.I.Acid Red 131, 0,05 Gew.-% Tetrabutylammoniumbromid, und 0,1 Gew.-% Essigsäure | 0,1 Gew.-% Farbstoff C.I. Acid Black 172, 0,1 Gew.-% Essigsäure/Acetat Puffer |
| Färbedauer | 20 Minuten | 200 Minuten |
| Färbetemperatur | 75°C | 75°C |
| erste Fixierlösung | 0,125 Gew.-% Tanninsäure, und 0,1 Gew.-% Ameisensäure | 0,2 Gew.-% EPIZOTAN FR-8800 |
| Fixierdauer | 15 Minuten | 30 Minuten |
| Fixiertemperatur | 80°C | 70°C |
| Erzielte Oberfläche des Formteils | matt wirkende, rote Oberfläche; homogene Färbung; keine Farbstoffmigration; | matt wirkende, schwarze Oberfläche; homogene Färbung; keine Farbstoffmigration; |
| Eindringtiefe des Farbstoffes in das Material des Formteils | 50 µm | 80 µm |

### Beispiel 3:

Der Versuch gemäß Beispiel 1 wurde wiederholt. Im Unterschied zu Beispiel 1 wurde die Färbedauer allerdings auf etwa 60 Minuten erhöht. Das Ergebnis war ein Formteil mit einer matt wirkenden, homogenen roten Oberfläche. Eine Farbstoffmigration war nicht nachweisbar. Es wurde aber eine Eindringtiefe des Farbstoffes in das Material des Formteils von etwa 110µm erzielt.

### Beispiel 4:

### Färbeschritt

Es wird eine wässrige Färbelösung (vorzugsweise auf Basis von deionisiertem Wasser) hergestellt, mit folgender Zusammensetzung:
- 0,25 Gew.-% des Farbstoffes C.I.Disperse Blue 354,
- 0,5 Gew% des Färbehilfsmittels Benzylalkohol und
- 0,1 Gew.-% Essigsäure/Acetat Puffer (es stellt sich ein pH-Wert von 4,5 ein).

Das Formteil, das aus einem Polypropylen im 3D-Druckverfahren gedruckt wurde, wird in die Färbelösung gelegt. Die Färbelösung und das darin angeordnete Formteil werden dann mit einer Heizrate von 2°C/min auf 100 °C erwärmt. Die Temperatur von 100°C wird für 30 Minuten gehalten.

Anschließend werden die Färbelösung und das darin angeordnete Formteil mit einer Abkühlrate von 2°C/min auf etwa 50°C abgekühlt.

Anschließend wird das Formteil aus der Färbelösung genommen und mit Wasser (bevorzugt deionisiertes Wasser) gereinigt.

### Erster Nachbehandlungsschritt

Es wird eine wässrige Fixierlösung (vorzugsweise auf Basis von deionisiertem Wasser) mit 0,5 Gew.-% der phenolbasierten Syntan-Verbindung MIDA FL (Handelsname des Herstellers Bi-Qem) hergestellt.

Die erste Fixierlösung wird dann auf eine Temperatur von 25°C erwärmt.

Das gefärbte Formteil wird in die erste Fixierlösung gegeben und die erste Fixier-lösung wird mit dem sich darin befindlichen Formteil mit einer Heizrate von 3°C/min auf eine Temperatur von 55°C erwärmt. Die Temperatur von 55°C wird für 45 Minuten gehalten.

Anschließend wird die erste Fixierlösung mit dem sich darin befindlichen Formteil mit einer Abkühlrate von 1°C/min auf etwa 40°C abgekühlt.

Anschließend wird das Formteil aus der ersten Fixierlösung genommen und mit Wasser (bevorzugt deionisiertes Wasser) gereinigt.

## Patentansprüche

1. Verfahren zum Färben eines in einem 3D-Druckverfahren mit einem Polymer hergestellten Formteils, wobei das Verfahren
- einen Färbeschritt (FS) zum Färben der Oberfläche des Formteils mit einem Farbstoff, und
- einen ersten Nachbehandlungsschritt (NBS1) zum Fixieren des in die Oberfläche des Formteils eingedrungenen Farbstoffes, wobei der erste Nachbehandlungsschritt nach dem Färbeschritt durchgeführt wird,
umfasst, wobei
in dem Färbeschritt
- das Formteil in eine Färbelösung gelegt wird, wobei die Färbelösung
- einen Farbstoff, und
- Wasser, bevorzugt deionisiertes Wasser,
umfasst, wobei der Farbstoff in das Material der Oberfläche des Formteils eingebracht wird, und
- die Färbelösung erwärmt wird, und
in dem ersten Nachbehandlungsschritt
- das in dem Färbeschritt gefärbte Formteil in eine erste Fixierlösung gelegt wird, wodurch der in das Material der Oberfläche des Formteils eingebrachte Farbstoff fixiert wird, wobei die erste Fixierlösung
- ein Polyphenol, eine Acryl-basierte Syntan-Verbindung, oder ein synthetisches Kondensationsprodukt zwischen aromatischen Verbindungen, insbesondere Phenole oder Naphthalenesulfonsäure, mit Formaldehyd oder Urea, und
- Wasser, bevorzugt deionisiertes Wasser
umfasst, und
- die erste Fixierlösung erwärmt wird.

2. Verfahren nach Anspruch 1, wobei
- die Färbelösung
- 0,0001 bis 10 Gew.-%, vorzugsweise 0,0001 bis 1 Gew.-% des Farbstoffes und
- auf 100 Gew.-% ergänzte Anteile des Wassers umfasst, und/oder
- die erste Fixierlösung
- 0,0001 bis 10 Gew.-%, vorzugsweise 0,0001 bis 0,5 Gew.-% des Polyphenols, der Acryl-basierten Syntan-Verbindung, oder des synthetischen Kondensationsproduktes und
- auf 100 Gew.-% ergänzte Anteile des Wassers
umfasst.

3. Verfahren nach einem der vorhergehenden Ansprüche, wobei die Färbelösung eine Säure oder einen Säure-Puffer aufweist, wobei die Menge der Säure oder des Säure-Puffers so gewählt wird, dass sich der pH-Wert der Färbelösung bei zwischen 2,5 und 7 einstellt, und/oder wobei die erste Fixierlösung zusätzlich eine Säure oder einen Säure-Puffers aufweist, wobei die Menge der Säure oder des Säure-Puffers so gewählt wird, dass sich der pH-Wert der erste Fixierlösung bei zwischen 3 und 7 einstellt.

4. Verfahren nach Anspruch 1, wobei die Färbelösung zusätzlich ein quartäres Ammoniumsalz im Verhältnis von zwischen 10:1 und 1:10 zum Farbstoff (Masse-Verhältnis quartäres Ammoniumsalz zu Farbstoff) aufweist.

5. Verfahren nach einem der vorhergehenden Ansprüche, wobei die Färbelösung erwärmt wird, nachdem das Formteil in die Färbelösung gelegt wurde, wobei die Färbelösung mit einer Heizrate von unter 5°C/min erwärmt wird, wobei die erste Fixierlösung erwärmt wird, nachdem das gefärbte Formteil in die erste Fixierlösung gelegt wurden, wobei die erste Fixierlösung mit einer Heizrate von unter 5°C/min erwärmt wird.

6. Verfahren nach einem der vorhergehenden Ansprüche, wobei das Verfahren einen zweiten Nachbehandlungsschritt (NBS2) zum weiteren Fixieren des aufgebrachten Farbstoffes an dem Formteil umfasst, wobei der zweite Nachbehandlungsschritt nach dem ersten Nachbehandlungsschritt ausgeführt wird, wobei in dem zweiten Nachbehandlungsschritt
- das Formteil in eine zweite Fixierlösung gelegt wird, wobei die zweite Fixierlösung
- ein Salz eines drei- oder vierwertigen Kations und
- Wasser, besonders bevorzugt deionisiertes Wasser umfasst, und
- die zweite Fixierlösung erwärmt wird.

7. Verfahren nach dem vorhergehenden Anspruch, wobei die zweite Fixierlösung
- 0,0001 bis 10 Gew.-%, vorzugsweise 0,0001 bis 0,5 Gew.-% des Salzes und
- auf 100 Gew.-% ergänzte Anteile des Wassers
umfasst.

8. Verfahren nach einem der beiden vorhergehenden Ansprüche, wobei die zweite Fixierlösung auf eine Temperatur zwischen 30°C und 150°C erwärmt wird, nachdem das Formteil in die zweite Fixierlösung gelegt wurde, wobei die zweite Fixierlösung mit einer Heizrate von unter 5°C/min erwärmt wird, und/oder die Färbelösung auf eine Temperatur zwischen 30°C und 150°C erwärmt wird, und/oder die erste Fixierlösung auf eine Temperatur zwischen 30°C und 150°C erwärmt wird.

9. Verfahren nach dem vorhergehenden Anspruch, wobei die zweite Fixierlösung vor der Entnahme des Formteils aus der zweiten Fixierlösung auf eine Temperatur zwischen 20°C und 75°C abgekühlt wird, wobei das Abkühlen mit einer Abkühlrate von unter 5°C/min erfolgt, und/oder wobei die Färbelösung vor der Entnahme des Formteils aus der Färbelösung auf eine Temperatur zwischen 20°C und 75°C abgekühlt wird, wobei das Abkühlen mit einer Abkühlrate von unter 5°C/min erfolgt, und/oder wobei die erste Fixierlösung vor der Entnahme des Formteils aus der ersten Fixier-lösung auf eine Temperatur zwischen 20°C und 75°C abgekühlt wird, wobei das Abkühlen mit einer Abkühlrate von unter 5°C/min erfolgt.

10. Verfahren nach einem der vorhergehenden Ansprüche, wobei
- die erste Fixierlösung auf eine Temperatur zwischen 30°C und 45°C erwärmt wird, bevor das Formteil in die erste Fixierlösung gelegt wird, oder
- ein Konzentrat der Fixierlösung auf eine Temperatur zwischen 30°C und 45°C erwärmt wird und das erwärmte Konzentrat mit Wasser gemischt wird, um die Fixierlösung zu erhalten, wobei
- das Formteil vor dem Mischen des erwärmten Konzentrats mit dem Wasser in das Wasser gelegt wird, wobei das Wasser vorzugsweise ebenfalls auf eine Temperatur zwischen 30°C und 45°C erwärmt wird, bevor das erwärmte Konzentrat mit dem Wasser gemischt wird, oder
- das Formteil nach dem Mischen des erwärmten Konzentrats mit dem Wasser in die Fixierlösung gelegt wird.

11. Verfahren nach einem der vorhergehenden Ansprüche, wobei die Färbelösung zusätzlich
- Ammonium- oder Alkalisalze als Stellmittel für Farbstoffe, und/oder
- einen Lösungsvermittler, und/oder
- ein Egalisiermittel,
- einen Entschäumer, und/oder
- ein Lösemittel
umfasst.

12. Verfahren nach einem der vorhergehenden Ansprüche, wobei das Formteil
- zwischen dem Färbeschritt und dem ersten Nachbehandlungsschritt, und/oder
- zwischen dem ersten Nachbehandlungsschritt und dem zweiten Nachbehandlungsschritt
gereinigt wird, vorzugsweise mit Wasser, besonders bevorzugt mit deionisiertem Wasser.

13. Verfahren nach einem der vorhergehenden Ansprüche, wobei
- das Formteil für eine Zeit zwischen 5 Minuten und 500 Minuten in die Färbelösung gelegt wird, und/oder
- das Formteil für zwischen 5 Minuten und 500 Minuten in die erste Fixier-lösung gelegt wird, und/oder
- das Formteil für zwischen 5 Minuten und 500 Minuten in die zweite Fixierlösung gelegt wird

14. Verfahren nach einem der vorhergehenden Ansprüche, wobei der Farbstoff ausgewählt wird aus der Gruppe umfassend Metallkomplexfarbstoffe, Säurefarbstoffe, Reaktivfarbstoffe, Azofarbstoffe, Dispersionsfarbstoffe, und Mischungen hiervon, und/oder wobei das Polymer ein Polymer mit einer Shore Härte von 10 Shore A bis 85 Shore D, vorzugsweise ein flexibles/elastisches Polymer mit einer Shore Härte von 10 Shore A bis 85 Shore D, besonders bevorzugt ein flexibles/elastisches Polymer auf Acrylat und/oder Urethanbasis, ist.

15. Verfahren nach einem der vorhergehenden Ansprüche, wobei der Färbeschritt und/oder der erste Nachbehandlungsschritt und/oder der zweite Nachbehandlungsschritt bei Überdruck in einem druckdichten Behälter durchgeführt werden.

## Claims

1. Method for dyeing a shaped part produced in a 3D printing process with a polymer, wherein the method comprises
- a dyeing step (FS) for dyeing the surface of the shaped part with a dye, and
- a first post-treatment step (NBS1) for fixing the dye which has penetrated the surface of the shaped part, wherein the first post-treatment step is carried out after the dyeing step,
wherein,
in the dyeing step,
- the shaped part is placed in a dye solution, wherein the dye solution comprises
- a dye, and
- water, preferably deionized water,
wherein the dye is introduced into the material of the surface of the shaped part, and
- the dye solution is heated, and,
in the first post-treatment step,
- the shaped part dyed in the dyeing step is placed in a first fixing solution, as a result of which the dye introduced into the material of the surface of the shaped part is fixed, wherein the first fixing solution comprises
- a polyphenol, an acrylic-based syntan compound, or a synthetic condensation product of aromatic compounds, in particular phenols or naphthalenesulfonic acid, with formaldehyde or urea, and
- water, preferably deionized water,
and
- the first fixing solution is heated.

2. Method according to claim 1, wherein
- the dye solution comprises
- 0.0001 to 10 wt.%, preferably 0.0001 to 1 wt.%, of the dye and
- proportions of water to make up to 100 wt.%,
and/or
- the first fixing solution comprises
- 0.0001 to 10 wt.%, preferably 0.0001 to 0.5 wt.% of the polyphenol, the acrylic-based syntan compound, or the synthetic condensation product, and
- proportions of water to make up to 100 wt.%.

3. Method according to either of the preceding claims, wherein the dye solution comprises an acid or an acid buffer, wherein the amount of the acid or the acid buffer is selected such that the pH of the dye solution is between 2.5 and 7, and/or wherein the first fixing solution additionally comprises an acid or an acid buffer, wherein the amount of the acid or the acid buffer is selected such that the pH of the first fixing solution is between 3 and 7.

4. Method according to claim 1, wherein the dye solution additionally has a quaternary ammonium salt in a ratio to the dye of between 10:1 and 1:10 (mass ratio of quaternary ammonium salt to dye).

5. Method according to any of the preceding claims, wherein the dye solution is heated after the shaped part has been placed in the dye solution, wherein the dye solution is heated at a heating rate of less than 5°C/min, wherein the first fixing solution is heated after the dyed shaped part has been placed in the first fixing solution, wherein the first fixing solution is heated at a heating rate of less than 5°C/min.

6. Method according to any of the preceding claims, wherein the method comprises a second post-treatment step (NBS2) for further fixing the applied dye to the shaped part, wherein the second post-treatment step is carried out after the first post-treatment step, wherein, in the second post-treatment step,
- the shaped part is placed in a second fixing solution, wherein the second fixing solution comprises
- a salt of a trivalent or tetravalent cation and
- water, particularly preferably deionized water,
and
- the second fixing solution is heated.

7. Method according to the preceding claim, wherein the second fixing solution comprises
- 0.0001 to 10 wt.%, preferably 0.0001 to 0.5 wt.%, of the salt and
- proportions of water to make up to 100 wt.%.

8. Method according to either of the two preceding claims, wherein the second fixing solution is heated to a temperature of between 30°C and 150°C after the shaped part has been placed in the second fixing solution, wherein the second fixing solution is heated at a heating rate of less than 5°C/min, and/or the dye solution is heated to a temperature of between 30°C and 150°C, and/or the first fixing solution is heated to a temperature of between 30°C and 150°C.

9. Method according to the preceding claim, wherein the second fixing solution is cooled to a temperature of between 20°C and 75°C before the shaped part is removed from the second fixing solution, wherein the cooling is carried out at a cooling rate of less than 5°C/min, and/or wherein the dye solution is cooled to a temperature of between 20°C and 75°C before the shaped part is removed from the dye solution, wherein the cooling is carried out at a cooling rate of less than 5°C/min, and/or wherein the first fixing solution is cooled to a temperature of between 20°C and 75°C before the shaped part is removed from the first fixing solution, wherein the cooling is carried out at a cooling rate of less than 5°C/min.

10. Method according to any of the preceding claims, wherein:
- the first fixing solution is heated to a temperature of between 30°C and 45°C before the shaped part is placed in the first fixing solution, or
- a concentrate of the fixing solution is heated to a temperature of between 30°C and 45°C and the heated concentrate is mixed with water to obtain the fixing solution, wherein
- the shaped part is placed in the water before the heated concentrate is mixed with the water, wherein the water is preferably likewise heated to a temperature of between 30°C and 45°C before the heated concentrate is mixed with the water, or
- the shaped part is placed in the fixing solution after the heated concentrate has been mixed with the water.

11. Method according to any of the preceding claims, wherein the dye solution additionally comprises
- ammonium or alkali salts as adjusters for dyes, and/or
- a solubilizer, and/or
- a leveling agent,
- a defoamer, and/or
- a solvent.

12. Method according to any of the preceding claims, wherein the shaped part is cleaned
- between the dyeing step and the first post-treatment step, and/or
- between the first post-treatment step and the second post-treatment step preferably with water, particularly preferably with deionized water.

13. Method according to any of the preceding claims, wherein:
- the shaped part is placed in the dye solution for a period of between 5 minutes and 500 minutes, and/or
- the shaped part is placed in the first fixing solution for between 5 minutes and 500 minutes, and/or
- the shaped part is placed in the second fixing solution for between 5 minutes and 500 minutes.

14. Method according to any of the preceding claims, wherein the dye is selected from the group comprising metallic complex dyes, acid dyes, reactive dyes, azoic dyes, disperse dyes, and mixtures thereof, and/or wherein the polymer is a polymer having a Shore hardness of 10 Shore A to 85 Shore D, preferably a flexible/elastic polymer having a Shore hardness of 10 Shore A to 85 Shore D, particularly preferably a flexible/elastic polymer based on acrylate and/or urethane.

15. Method according to any of the preceding claims, wherein the dyeing step and/or the first post-treatment step and/or the second post-treatment step are carried out in a pressure-tight container at overpressure.

## Revendications

1. Procédé permettant de colorer une pièce moulée fabriquée avec un polymère par un procédé d'impression 3D, dans lequel le procédé comprend
- une étape de coloration (FS) consistant à colorer la surface de la pièce moulée avec un colorant, et
- une première étape de post-traitement (NBS1) consistant à fixer le colorant qui a pénétré dans la surface de la pièce moulée, dans lequel la première étape de post-traitement est réalisée après l'étape de coloration,
dans lequel,
dans l'étape de coloration,
- la pièce moulée est placée dans une solution de coloration, dans lequel la solution de coloration comprend
- un colorant, et
- de l'eau, de préférence de l'eau désionisée,
dans lequel le colorant est incorporé dans le matériau de la surface de la pièce moulée, et
- la solution de coloration est chauffée, et
dans la première étape de post-traitement,
- la pièce moulée colorée à l'étape de coloration est placée dans une première solution de fixation, moyennant quoi le colorant introduit dans le matériau de la surface de la pièce moulée est fixé, dans lequel la première solution de fixation comprend
- un polyphénol, un composé syntan à base d'acrylique, ou un produit de condensation synthétique parmi des composés aromatiques, en particulier des phénols ou l'acide naphtalène-sulfonique, et le formaldéhyde ou l'urée, et
- de l'eau, de préférence de l'eau désionisée
et
- la première solution de fixation est chauffée.

2. Procédé selon la revendication 1, dans lequel
- la solution de coloration comprend
- 0,0001 à 10 % en poids, de préférence 0,0001 à 1 % en poids du colorant, et
- des proportions de l'eau, complétées à 100 % en poids
et/ou
- la première solution de fixation comprend
- 0,0001 à 10 % en poids, de préférence 0,0001 à 0,5 % en poids du polyphénol, du composé syntan à base d'acrylique, ou du produit de condensation synthétique, et
- des proportions de l'eau, complétées à 100 % en poids

3. Procédé selon l'une des revendications précédentes, dans lequel la solution de coloration présente un acide ou un tampon acide, dans lequel la quantité d'acide ou de tampon acide est choisie de telle sorte que le pH de la solution de coloration est ajusté entre 2,5 et 7, et/ou dans lequel la première solution de fixation présente en outre un acide ou un tampon acide, dans lequel la quantité d'acide ou de tampon acide est choisie de telle sorte que le pH de la première solution de fixation est ajusté entre 3 et 7.

4. Procédé selon la revendication 1, dans lequel la solution de coloration présente en outre un sel d'ammonium quaternaire dans un rapport compris entre 10:1 et 1:10 par rapport au colorant (rapport en masse du sel d'ammonium quaternaire au colorant).

5. Procédé selon l'une des revendications précédentes, dans lequel la solution de coloration est chauffée après que la pièce moulée a été placée dans la solution de coloration, dans lequel la solution de coloration est chauffée à une vitesse de chauffage inférieure à 5° C/min, dans lequel la première solution de fixation est chauffée après que la pièce moulée colorée a été placée dans la première solution de fixation, dans lequel la première solution de fixation est chauffée à une vitesse de chauffage inférieure à 5° C/min.

6. Procédé selon l'une des revendications précédentes, dans lequel le procédé comprend une seconde étape de post-traitement (NBS2) consistant à fixer davantage le colorant appliqué sur la pièce moulée, dans lequel la seconde étape de post-traitement est réalisée après la première étape de post-traitement, dans lequel, dans la seconde étape de post-traitement,
- la pièce moulée est placée dans une seconde solution de fixation, dans lequel la seconde solution de fixation comprend
- un sel d'un cation trivalent ou tétravalent, et
- de l'eau, de manière particulièrement préférée de l'eau désionisée
et
- la seconde solution de fixation est chauffée.

7. Procédé selon la revendication précédente, dans lequel la seconde solution de fixation comprend
- 0,0001 à 10 % en poids, de préférence 0,0001 à 0,5 % en poids du sel, et
- des proportions de l'eau, complétées à 100 % en poids.

8. Procédé selon l'une des deux revendications précédentes, dans lequel la seconde solution de fixation est chauffée à une température comprise entre 30° C et 150° C après que la pièce moulée a été placée dans la seconde solution de fixation, dans lequel la seconde solution de fixation est chauffée à une vitesse de chauffage inférieure à 5° C/min, et/ou la solution de coloration est chauffée à une température comprise entre 30° C et 150° C, et/ou la première solution de fixation est chauffée à une température comprise entre 30° C et 150° C.

9. Procédé selon la revendication précédente, dans lequel la seconde solution de fixation est refroidie à une température comprise entre 20° C et 75° C avant le retrait de la pièce moulée de la seconde solution de fixation, dans lequel le refroidissement est effectué à une vitesse de refroidissement inférieure à 5° C/min, et/ou dans lequel la solution de coloration est refroidie à une température comprise entre 20° C et 75° C avant le retrait de la pièce moulée de la solution de coloration, dans lequel le refroidissement est effectué à une vitesse de refroidissement inférieure à 5° C/min, et/ou dans lequel la première solution de fixation est refroidie à une température comprise entre 20° C et 75° C avant le retrait de la pièce moulée de la première solution de fixation, dans lequel le refroidissement est effectué à une vitesse de refroidissement inférieure à 5° C/min.

10. Procédé selon l'une des revendications précédentes, dans lequel
- la première solution de fixation est chauffée à une température comprise entre 30° C et 45° C avant que la pièce moulée ne soit placée dans la première solution de fixation, ou
- un concentré de la solution de fixation est chauffé à une température comprise entre 30° C et 45° C et le concentré chauffé est mélangé avec de l'eau pour obtenir la solution de fixation, dans lequel
- la pièce moulée est placée dans l'eau avant le mélange du concentré chauffé avec l'eau, dans lequel l'eau est de préférence également chauffée à une température comprise entre 30° C et 45° C avant que le concentré chauffé ne soit mélangé avec l'eau, ou
- la pièce moulée est placée dans la solution de fixation après le mélange du concentré chauffé avec l'eau.

11. Procédé selon l'une des revendications précédentes, dans lequel la solution de coloration comprend en outre
- des sels d'ammonium ou alcalins comme agents de fixation pour les colorants, et/ou
- un agent de solubilisation, et/ou
- un agent d'égalisation,
- un agent antimousse, et/ou
- un solvant.

12. Procédé selon l'une des revendications précédentes, dans lequel,
- entre l'étape de coloration et la première étape de post-traitement, et/ou
- entre la première étape de post-traitement et la seconde étape de post-traitement,
la pièce moulée est nettoyée, de préférence avec de l'eau, de manière particulièrement préférée avec de l'eau désionisée.

13. Procédé selon l'une des revendications précédentes, dans lequel
- la pièce moulée est placée dans la solution de coloration pendant une durée comprise entre 5 minutes et 500 minutes, et/ou
- la pièce moulée est placée dans la première solution de fixation pendant une durée comprise entre 5 minutes et 500 minutes, et/ou
- la pièce moulée est placée dans la seconde solution de fixation pendant une durée comprise entre 5 minutes et 500 minutes

14. Procédé selon l'une des revendications précédentes, dans lequel le colorant est choisi dans le groupe comprenant les colorants complexes métalliques, colorants acides, colorants réactifs, colorants azoïques, colorants dispersés, et leurs mélanges, et/ou dans lequel le polymère est un polymère ayant une dureté Shore de 10 Shore A à 85 Shore D, de préférence un polymère flexible/élastique ayant une dureté Shore de 10 Shore A à 85 Shore D, de manière particulièrement préférée un polymère flexible/élastique à base d'acrylate et/ou d'uréthane.

15. Procédé selon l'une des revendications précédentes, dans lequel l'étape de coloration et/ou la première étape de post-traitement et/ou la seconde étape de post-traitement sont réalisées en surpression dans un récipient étanche à la pression.
